# EUROPÄISCHE PATENTANMELDUNG

(11) **EP 1 712 827 A2**
(43) Veröffentlichungstag der Anmeldung: **18.10.2006**
(21) Anmeldenummer: 06007259.2
(22) Anmeldetag: 06.04.2006
(51) Int. Cl.: F16L 55/165

(54) **Schauch zur Sanierung von Rohrleitungen**

(30) Priorität: 12.04.2005 DE 202005005808 U; 20.12.2005 DE 202005019995 U
(71) Anmelder: Vereinigte Filzfabriken AG, 89537 Giengen (DE)
(72) Erfinder: Holl, Peter, 73463 Westhausen (DE); Gentner, Xaver, 73450 Neresheim (DE)
(74) Vertreter: Lorenz, Werner

(57) **Zusammenfassung**

Ein Schlauch (2) zur Sanierung von Rohrleitungen (1) ist aus einem an einer Naht (3) verbundenen, flächigen Material hergestellt, wobei die Naht (3) zumindest auf einer Seite mittels eines Verstärkungsbandes (7) abgedeckt ist. Die Naht (3) verläuft nur durch einen Teil der Dicke des Verstärkungsbandes.

## Beschreibung

Die Erfindung betrifft einen Schlauch zur Sanierung von Rohrleitungen, der aus einem an einer Naht verbundenen, flächigen Material hergestellt ist, nach der im Oberbegriff von Anspruch 1 näher definierten Art. Des weiteren betrifft die Erfindung ein Verfahren zur Herstellung eines Schlauches zur Sanierung von Rohrleitungen gemäß dem Oberbegriff von Anspruch 10 sowie eine Vorrichtung zur Durchführung des Verfahrens gemäß dem Oberbegriff von Anspruch 13.

Ein solcher Schlauch, der allerdings kein Verstärkungsband aufweist, ist beispielsweise in der DE 196 46 080 C2 beschrieben. Aus dem allgemeinen Stand der Technik ist es bekannt, die Naht, mittels der das flächige Material zu einem Schlauch verbunden wird, mit einem Verstärkungsband abzudecken, um eine verbesserte Dichtheit der Naht zu erreichen.

Problematisch bei den allgemein bekannten Schläuchen mit solchen Verstärkungsbändern ist jedoch, dass aufgrund der Naht, die die beiden Enden des flächigen Materials und das Verstärkungsband verbindet, eine völlige Dichtheit nur sehr schwer möglich ist, da zur Erzeugung der Naht das Verstärkungsband perforiert werden muss. Insbesondere während der Aushärtung der Schläuche innerhalb der zu sanierenden Rohrleitung und des dabei vor sich gehenden Schrumpfungsprozesses ergeben sich häufig Undichtigkeiten.

Es ist daher Aufgabe der vorliegenden Erfindung, einen Schlauch zur Sanierung von Rohrleitungen zu schaffen, der eine gegenüber bekannten Lösungen verbesserte Dichtheit aufweist.

Erfindungsgemäß wird diese Aufgabe durch die in Anspruch 1 genannten Merkmale gelöst.

Dadurch, dass die Naht erfindungsgemäß nur durch einen Teil der Dicke des Verstärkungsbandes und somit nur innerhalb desselben verläuft, weist das Verstärkungsband an seiner dem Schlauch abgewandten Seite keine durch Nahtstiche hervorgerufene Löcher auf und auch der die Naht erzeugende Faden verläuft nicht auf der Außenseite des Verstärkungsbandes. Dadurch wird die den Schlauch verbindende und das Verstärkungsband an dem Schlauch befestigende Naht so abgedichtet, dass auch beim späteren Einsatz des Schlauches in einer Rohrleitung und der dabei gegebenenfalls auftretenden Schrumpfungsprozesse eine vollkommene Dichtheit erreicht werden kann und keinerlei Feuchtigkeit mehr durch die Naht und insbesondere durch das Verstärkungsband dringen kann.

Als für die Praxis besonders vorteilhaft hat es sich herausgestellt, wenn das Verstärkungsband eine Dicke von 3 - 5 mm aufweist, wobei die Naht in einer Tiefe von 2 - 4 mm innerhalb des Verstärkungsbands verläuft.

Ein Verfahren zur Herstellung eines solchen Schlauches ist in Anspruch 10 angegeben.

Um die gewünschte Wirkung zu erreichen, nämlich dass die Naht nur durch einen Teil der Dicke des Verstärkungsbands verläuft, ist es lediglich erforderlich, das Verstärkungsband beim Vernähen entsprechend gegenüber dem Schlauch anzuordnen.

Hinsichtlich des Aufwands zur Herstellung des erfindungsgemäßen Schlauches ist es besonders vorteilhaft, wenn das flächige Material und das Verstärkungsband gleichzeitig mit ein und derselben Naht vernäht werden.

In Anspruch 13 ist eine Vorrichtung zur Durchführung des Verfahrens angegeben.

Mit Hilfe der Führungseinrichtung kann das Verstärkungsband so gegenüber dem an dem Anschlag anliegenden flächigen Material geführt werden, dass die Enden des flächigen Materials in Richtung der Näheinrichtung über das Verstärkungsband überstehen, so dass bei entsprechender Anordnung der Führungseinrichtung gegenüber der Näheinrichtung eine Naht in dem Verstärkungsband erzeugt wird, die nicht über die gesamte, sondern nur über einen Teil der Dicke des Verstärkungsbandes verläuft.

Wenn die Führungseinrichtung gegenüber dem Anschlag verstellbar ist, so können mit der erfindungsgemäßen Vorrichtung vorteilhafterweise Verstärkungsbänder mit unterschiedlicher Dicke verarbeitet werden.

Weitere vorteilhafte Ausgestaltungen und Weiterbildungen der Erfindung ergeben sich aus den restlichen Unteransprüchen. Nachfolgend ist ein Ausführungsbeispiel der Erfindung anhand der Zeichnung prinzipmäßig beschrieben.

Es zeigt:
- Fig. 1: einen Schnitt durch eine Rohrleitung mit einem darin eingebrachten, erfindungsgemäßen Schlauch;
- Fig. 2: einen Schnitt durch den Schlauch nach der Linie II-II aus Fig. 1 in einer stark vergrößerten Ansicht;
- Fig. 3: eine stark vergrößerte Draufsicht auf das Trägermaterial des erfindungsgemäßen Schlauches;
- Fig. 4: eine erfindungsgemäße Vorrichtung zur Herstellung des Schlauches;
- Fig. 5: eine erste Ausführungsform einer Führungseinrichtung für die erfindungsgemäße Vorrichtung;
- Fig. 6: eine zweite Ausführungsform einer Führungseinrichtung für die erfindungsgemäße Vorrichtung; und
- Fig. 7: ein mit dem erfindungsgemäßen Verfahren hergestellter Schlauch.

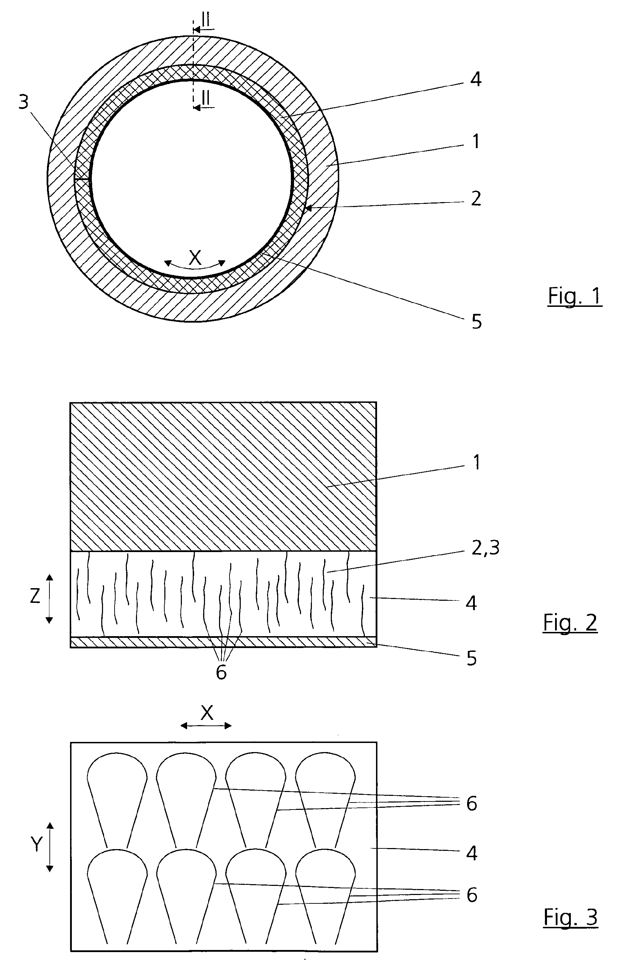

Fig. 1 zeigt einen Schnitt durch eine Rohrleitung 1 mit einer darin eingebrachten Vorrichtung 2 zur Sanierung der Rohrleitung 1. Die Art und Weise der Einbringung des Schlauches 2 in die Rohrleitung 1, vorzugsweise mittels des sogenannten Inversionsverfahrens, ist aus dem allgemeinen Stand der Technik bekannt und wird daher nachfolgend nicht näher beschrieben. Vorzugsweise werden mittels des Schlauches 2 Rohrleitungen 1 saniert, die beispielsweise durch undichte Verbindungen, Bodenverschiebungen, Baumwuchs oder aus anderen Gründen undicht geworden sind.

Nach seiner Einbringung in die Rohrleitung 1 dichtet der Schlauch 2 dieselbe nach außen ab, so dass ein Austreten von durch die Rohrleitung 1 strömenden Flüssigkeiten verhindert wird. Der nachfolgend beschriebene Schlauch 2 ist insbesondere für Rohrleitungen 1 für den Hausanschlussbereich vorgesehen, jedoch keinesfalls darauf beschränkt.

Der Schlauch 2 ist aus einem flächigen Material gebildet, was zu einem späteren Zeitpunkt detaillierter beschrieben wird. An seiner Verbindungsstelle weist der Schlauch 2 eine Naht 3 auf, an der die beiden Enden des flächigen Materials miteinander verbunden werden. Auch dies wird zu einem späteren Zeitpunkt detaillierter beschrieben.

Wie in dem Schnitt gemäß Fig. 2 deutlicher zu erkennen ist, weist der Schlauch 2 ein Trägermaterial 4 und eine mit dem Trägermaterial 4 verbundene Beschichtung 5 auf. Bei dem Trägermaterial 4 handelt es sich um einen vorzugsweise aus Polyester bestehenden, vermaschten Vliesstoff, wie in Fig. 2 und Fig. 3 durch einzelne Maschen 6 zeichnerisch angedeutet ist. Selbstverständlich kommen für das Trägermaterial 4 auch andere geeignete Materialien in Frage. Vorzugsweise ist das Trägermaterial 4 des weiteren in seiner mit "Z" bezeichneten Dickenrichtung vernadelt, um eine bessere Verbindung der einzelnen Maschen 6 des Trägermaterials 4 zu erreichen.

Das Trägermaterial 4 weist in der dargestellten Ausführungsform ein Flächengewicht von 500 bis 600 g/m², vorzugsweise ca. 550 g/m², auf, es sind jedoch auch andere Flächengewichte denkbar. Der Schlauch 2, d.h. das Trägermaterial 4 mit der Beschichtung 5, weist eine Wandstärke von 3 bis 5 mm, vorzugsweise ca. 4,5 mm, auf. Diese hohe Wandstärke des Schlauches 2 ist nur durch die Verwendung des vermaschten Vliesstoffes für das Trägermaterial 4 möglich und bietet eine gegenüber bekannten Lösungen erheblich verbesserte Festigkeit. Diese durch die große Dicke verbesserte Festigkeit des Trägermaterials 4 wird noch dadurch erhöht, dass das Trägermaterial 4 aufgrund seiner erhöhten Wandstärke eine größere Menge an nicht dargestelltem Harz aufnehmen kann, mit dem das Trägermaterial 4 vor der Einbringung des Schlauches 2 in die Rohrleitung 1 in an sich bekannter Weise übergossen wird. Das Harz stellt dabei in ebenfalls an sich bekannter Weise die Verbindung des Schlauches 2 zu der Rohrleitung 1 her, die aus Kunststoff, Metallguss, Steinzeug, Beton oder einem anderen für Rohrleitungen 1 üblichen Material bestehen kann, und dichtet die Naht 3 ab. Da die Beschichtung 5 bei der bestimmungsgemäßen Verwendung des Schlauches 2 in Kontakt mit der sich in der Rohrleitung 1 befindlichen Flüssigkeit ist, sollte sie möglichst gas- und flüssigkeitsdicht ausgeführt sein.

Aus der vergrößerten Darstellung des das Trägermaterial 4 bildenden vermaschten Vliesstoffes gemäß Fig. 3 ist eine bestimmte, gleichmäßige Anordnung der Maschen 6 erkennbar, welche dazu führt, dass der vermaschte Vliesstoff bzw. das Trägermaterial 4 in der mit "X" bezeichneten radialen Richtung des Schlauches 2 eine höhere Dehnbarkeit aufweist als in der mit "Y" bezeichneten axialen Richtung des Schlauches 2, in welcher das Trägermaterial 4 relativ formstabil ist. Da der Schlauch 2 vor dem oben kurz beschriebenen Verbinden der seitlichen Kanten zunächst als flächiges Material vorliegt, wird die Richtung, in der das Trägermaterial 4 die höhere Dehnbarkeit aufweist, selbstverständlich durch diese Bildung des Schlauches 2 aus dem flächigen Material bestimmt. Folglich sollte hierbei darauf geachtet werden, dass der Schlauch 2 tatsächlich so gebildet wird, dass er in radialer Richtung X eine höhere Dehnbarkeit aufweist als in axialer Richtung Y.

Diese Ausführung des Schlauches 2 mit der hohen Dehnbarkeit in radialer Richtung X gewährleistet, dass das Material jeweils an die Stelle um den Umfang der Rohrleitung 1 gelangt, an der es erforderlich ist, so dass einerseits keine Materialanhäufung und andererseits auch keine zu starken Spannungen innerhalb des Materials entstehen. Dadurch legt sich der Schlauch 2 bei Krümmungen, Durchmesseränderungen oder anderen größeren Unebenheiten der Rohrleitung 1 besser an dieselbe an und erzeugt weniger Falten oder sonstige Verwerfungen. Diese Eigenschaft des Schlauches 2 wird auch als Bogengängigkeit bezeichnet.

Zur Herstellung des Schlauches 2 bzw. des flächigen Materials liegt das Trägermaterial 4 zunächst in Form eines feinen Flors vor, dessen Fasern in Längsrichtung ausgerichtet sind. Zur vorzugsweise beidseitigen Vermaschung dieses Materials wird eine Vielzahl von nicht dargestellten Nadeln, die jeweils einen daran angeformten Haken aufweisen, in den Flor bzw. Vliesstoff eingestochen und zurückgezogen, wodurch die Maschen 6 gebildet werden. Dieses Verfahren kann mit dem Verfahren des Strickens verglichen werden, wobei im Unterschied hierzu bei dem Trägermaterial 4 als Ausgangsmaterial ein Vliesstoff statt eines Fadens verwendet wird. Nach der Erzeugung der Maschen 6 kann ein Thermokalibriervorgang und ein sogenannter Dilorisiervorgang, also ein Vernadeln, folgen. Bei der Thermokalibrierung wird das Trägermaterial 4 zwischen nicht dargestellten Walzenpaaren durchgeführt, um die Dicke des Trägermaterials 4 sehr exakt einzustellen.

Anschließend wird der das Trägermaterial 4 bildende vermaschte Vliesstoff mit der Beschichtung 5 versehen, wozu eine beispielsweise aus Polyurethan bestehende Beschichtung 5 wie nachfolgend beschrieben mit dem Trägermaterial 4 verklebt wird, wodurch ein flächiges Gebilde entsteht. Die Verwendung von Polyurethan für die Beschichtung 5 bringt neben der Gas- und Flüssigkeitsdichtheit auch den Vorteil mit sich, dass dieses Material die oben beschriebene Dehnbarkeit des Trägermaterials 4 nur unwesentlich behindert.

Zur Herstellung der Beschichtung 5 und Aufbringung derselben auf das Trägermaterial 4 wird vorzugsweise ein indirektes Verfahren verwendet, bei welchem die Beschichtung 5 vorzugsweise in mehreren Schichten beispielsweise auf ein Silikonpapier aufgebracht wird. Die Beschichtung 5 kann dabei ein Flächengewicht von ca. 300 g/m² aufweisen, es sind jedoch selbstverständlich auch vollkommen andere Flächengewichte denkbar, wenn diese mit der vorgesehenen Verwendung der Vorrichtung 2 zur Sanierung der Rohrleitung 1 in Einklang gebracht werden können. Nach dem Aufbringen der letzten Schicht, die vorzugsweise als Klebeschicht ausgeführt ist, wird das Trägermaterial 4 auf diese letzte Schicht aufgepresst und dadurch mit der Beschichtung 5 verklebt. Nach der erfolgten Verklebung der Beschichtung 5 mit dem Trägermaterial 4 wird das Silikonpapier abgezogen. Dieses flächige Gebilde, bestehend aus dem Trägermaterial 4 und der Beschichtung 5, wird dann wie oben beschrieben zu dem Schlauch 2 geformt.

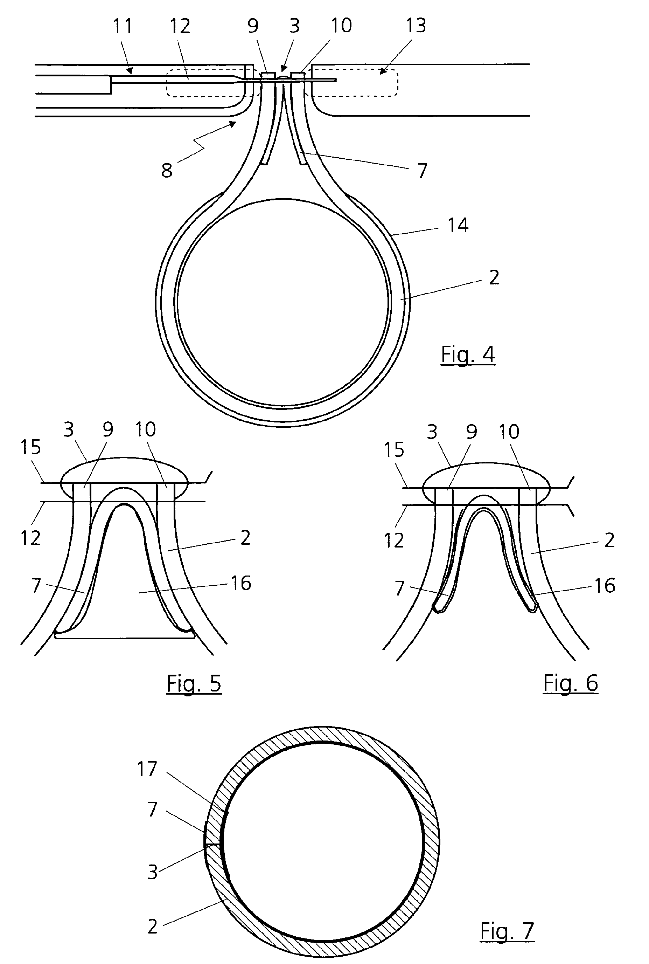

Wie in Fig. 1 ebenfalls zu erkennen ist, ist die Naht 3 des Schlauches 2 mittels eines Verstärkungsbandes 7 abgedeckt. Die Art und Weise der Anbringung des Verstärkungsbandes 7 an dem Schlauch 2 wird nachfolgend unter Bezugnahme auf die Figuren 4, 5, 6 und 7 detaillierter beschrieben.

Fig. 4 zeigt eine Vorrichtung 8 zur Herstellung der in Längsrichtung des Schlauches 2 verlaufenden Naht 3, mit welcher sowohl die beiden Enden 9 und 10 des flächigen Materials, welches den Schlauch 2 bildet, als auch das Verstärkungsband 7 miteinander verbunden werden. Hierzu weist die Vorrichtung 8 eine Näheinrichtung 11 mit einer sich in Richtung des Pfeils A hin- und herbewegender Nadel 12, eine nur gestrichelt dargestellte Transporteinrichtung 13 zur Bewegung des flächigen Materials entlang der Näheinrichtung 11, eine Halteeinrichtung 14 für das flächige Material und einen Anschlag 15 auf, an dem die beiden Enden 9 und 10 des flächigen Materials anliegen. Bei der Transporteinrichtung 13 kann es sich zum Beispiel um zwei einander gegenüberliegende, rotierende Trommeln oder dergleichen handeln.

Die Halteeinrichtung 14 für das flächige Material bzw. den daraus herzustellenden Schlauch 2 ist im vorliegenden Fall in Form eines doppelwandigen Rohres ausgebildet, wobei sich der Schlauch 2 in einem durch das doppelwandige Rohr gebildeten Ringspalt befindet und durch dasselbe in seine Form gebracht wird. Die beiden Enden 9 und 10 des flächigen Materials ragen oben aus der Halteeinrichtung 14 heraus. Der nicht dargestellte Faden zur Herstellung der Naht 3 ist selbstverständlich an der Nadel 12 angebracht. Zur Herstellung der Naht 3 können verschiedene bekannte und geeignete Techniken eingesetzt werden, die an dieser Stelle nicht ausführlich beschrieben werden müssen. Beispielsweise kann es sich um eine sogenannte Zweifadenkettstichnaht handeln.

Des weiteren weist die Vorrichtung 8 eine Führungseinrichtung 16 für das Verstärkungsband 7 auf, welche das Verstärkungsband 7 im Bereich der Näheinrichtung 11 so gegenüber dem flächigen Material führt, dass die beiden mit der Naht 3 zu verbindenden Enden 9 und 10 des flächigen Materials über das Verstärkungsband 7 überstehen. Dadurch ist sichergestellt, dass bei der Erzeugung der Naht 3 mittels der Näheinrichtung 11 die Naht 3 nur durch einen Teil der Dicke des Verstärkungsbandes 7 verläuft und nicht an der dem Schlauch 2 abgewandten Seite desselben. Der Verlauf der Naht 3 innerhalb des Verstärkungsbandes 7 ist in den vergrößerten Darstellungen der Figuren 5 und 6 sowie in der Darstellung des fertigen Schlauches 2 gemäß Fig. 7 deutlicher erkennbar. Das Verstärkungsband 7 weist vorzugsweise eine Dicke von 3 bis 5 mm auf, wobei die Naht 3 in diesem Fall vorzugsweise in einer Tiefe von 2 bis 4 mm innerhalb des Verstärkungsbands 7 verläuft. Allgemein sollte die Naht 3 in einer derartigen Höhe bzw. Tiefe innerhalb des Verstärkungsbandes 7 verlaufen, dass sie einerseits nicht über die Außenseite desselben gelangt und dass andererseits eine feste und sichere Anbringung des Verstärkungsbands 7 an dem Schlauch 2 gewährleistet ist. In Fig. 7 ist auch ein Abdichtband 17 dargestellt, das die Dichtheit des Schlauches 2 verbessert und sich im Bereich der Naht 3 auf der gegenüberliegenden Seite des Verstärkungsbandes 7 befindet. Da das Abdichtband 17 und dessen Anbringung an dem Schlauch 2 an sich bekannt sind, wird hierin nicht näher darauf eingegangen.

Die Führungseinrichtung 16 für das Verstärkungsband 7 kann, wie in Fig. 5 dargestellt, im Querschnitt T-förmig ausgeführt sein, es kann sich jedoch auch, wie in Fig. 6 dargestellt, um ein Hohlprofil handeln, in welchem das Verstärkungsband 7 vollständig aufgenommen ist. In Längsrichtung des Verstärkungsbandes 7 endet die Führungseinrichtung 16 kurz vor der Näheinrichtung 11, um das Annähen des Verstärkungsbandes 7 an den Schlauch 2 zu ermöglichen. Da sowohl das Verstärkungsband 7 als auch der Schlauch 2 unterschiedliche Dicken aufweisen können, ist die Führungseinrichtung 16 im vorliegenden Fall gegenüber dem Anschlag 15 verstellbar, um auf diese Weise den Ort, an dem sich die Naht 3 innerhalb des Verstärkungsbandes 7 befindet, exakt festlegen zu können.

Um zu erreichen, dass das Verstärkungsband 7 ungefähr in der Mitte seiner Breite vernäht wird, ist es, wie in den Figuren 4, 5 und 6 erkennbar, zwischen dem den Schlauch 2 bildenden flächigen Material angeordnet und ist in dem Bereich, in dem es mit dem flächigen Material bzw. dem Schlauch 2 vernäht wird, um seine Längsachse gefaltet. Durch das spätere Umstülpen des Schlauches 2 innerhalb der Rohrleitung 1 liegt das sich in Fig. 4 innerhalb des Schlauches 2 befindliche Verstärkungsband 7 an der Rohrleitung 1 an und sorgt so für die notwendige Abdichtung. Bei diesem Umstülpen des Schlauches 2 wird das Verstärkungsband 7 noch besser an den Schlauch 2 angelegt, insbesondere da die Rohrleitung 1 an dem Verstärkungsband 7 an den Schlauch 2 anpresst.

Die Vorrichtung 8 kann des weiteren eine nicht dargestellte, der Näheinrichtung 11 nachgeschaltete Einrichtung zum Aufschweißen des Verstärkungsbands 7 mit dem Schlauch 2 aufweisen.

## Patentansprüche

1. Schlauch zur Sanierung von Rohrleitungen, der aus einem an einer Naht verbundenen, flächigen Material hergestellt ist, wobei die Naht zumindest auf einer Seite mittels eines Verstärkungsbandes abgedeckt ist,
**dadurch gekennzeichnet, dass**
die Naht (3) nur durch einen Teil der Dicke des Verstärkungsbandes (7) verläuft.

2. Schlauch nach Anspruch 1,
**dadurch gekennzeichnet , dass**
das Verstärkungsband (7) eine Dicke von 3 - 5 mm aufweist, und dass die Naht (3) in einer Tiefe von 2 - 4 mm innerhalb des Verstärkungsbands (7) verläuft.

3. Schlauch nach Anspruch 1 oder 2,
**dadurch gekennzeichnet, dass**
der Schlauch ein Trägermaterial (4) und eine mit dem Trägermaterial (4) verbundene Beschichtung (5) aufweist, wobei das Trägermaterial (4) ein vermaschter Vliesstoff ist, welcher in radialer Richtung (X) des Schlauches (2) eine höhere Dehnbarkeit aufweist als in axialer Richtung (Y) desselben.

4. Schlauch nach Anspruch 3,
**dadurch gekennzeichnet , dass**
das Trägermaterial (4) aus Polyester besteht.

5. Schlauch nach Anspruch 3 oder 4,
**dadurch gekennzeichnet , dass**
das Trägermaterial (4) in Dickenrichtung (Z) vernadelt ist.

6. Schlauch nach Anspruch 3, 4 oder 5,
**dadurch gekennzeichnet , dass**
das Trägermaterial (4) ein Flächengewicht von 500 - 600 g/m², vorzugsweise ca. 550 g/m², aufweist.

7. Schlauch nach einem der Ansprüche 1 bis 6,
**dadurch gekennzeichnet, dass**
der Schlauch (2) eine Wandstärke von 3 - 5 mm aufweist.

8. Schlauch nach einem der Ansprüche 3 bis 7,
**dadurch gekennzeichnet, dass**
die Beschichtung (5) mit dem Trägermaterial (4) verklebt ist.

9. Schlauch nach einem der Ansprüche 3 bis 8,
**dadurch gekennzeichnet , dass**
die Beschichtung (5) aus Polyurethan besteht.

10. Verfahren zur Herstellung eines Schlauches zur Sanierung von Rohrleitungen, wobei ein flächiges Material mit einer Naht zu dem Schlauch verbunden wird, und wobei in dem Bereich der Naht ein Verstärkungsband mit dem Schlauch vernäht wird,
**dadurch gekennzeichnet , dass**
das Verstärkungsband (7) beim Vernähen derart gegenüber dem Schlauch (2) angeordnet wird, dass die Naht (3) nur durch einen Teil der Dicke des Verstärkungsbands (7) verläuft.

11. Verfahren nach Anspruch 10,
**dadurch gekennzeichnet, dass**
das flächige Material und das Verstärkungsband (7) gleichzeitig mit ein und derselben Naht (3) vernäht werden.

12. Verfahren nach Anspruch 10 oder 11,
**dadurch gekennzeichnet, dass**
das Verstärkungsband (7) zumindest in dem Bereich, in dem es mit dem Schlauch (2) vernäht wird, um eine Längsachse gefaltet und zwischen den beiden mit der Naht (3) zu verbindenden Enden (9,10) des flächigen Materials angeordnet wird.

13. Vorrichtung zur Durchführung des Verfahrens nach einem der Ansprüche 10 bis 12 mit einer Näheinrichtung zur Herstellung einer Naht, einer Transporteinrichtung zur Bewegung des flächigen Materials entlang der Näheinrichtung, einer Halteeinrichtung für das flächige Material und mit einem Anschlag, an dem die beiden mit der Naht zu verbindenden Enden des flächigen Materials anschlagen,
**gekennzeichnet durch**
eine Führungseinrichtung (16), welches das Verstärkungsband (7) im Bereich der Näheinrichtung (11) so gegenüber dem flächigen Material führt, dass die beiden mit der Naht (3) zu verbindenden Enden (9, 10) des flächigen Materials über das Verstärkungsband (7) überstehen.

14. Vorrichtung nach Anspruch 13,
**dadurch gekennzeichnet , dass**
die Führungseinrichtung (16) gegenüber dem Anschlag (15) verstellbar ist.

15. Vorrichtung nach Anspruch 13 oder 14,
**dadurch gekennzeichnet, dass**
die Führungseinrichtung (16) als Hohlprofil zur Aufnahme des Verstärkungsbandes (7) ausgebildet ist.
